# EUROPEAN PATENT APPLICATION

(11) **EP 4 721 853 A1**
(43) Date of publication of application: **08.04.2026**
(21) Application number: 24203996.4
(22) Date of filing: 01.10.2024
(51) Int. Cl.: B01J 19/00, B01L 3/00

(54) **CARTRIDGE FOR A PHARMACEUTICAL PROCESS**

(71) Applicant: BioNTech SE, 55131 Mainz (DE)
(72) Inventor: PFLÜGER, Kai Matthias, 55131 Mainz (DE); PÜTZ, Nils Felix, 55131 Mainz (DE); KRAZ-OBERLÄNDER, Sebastian Rudi Adam, 55131 Mainz (DE); DE MOS, Julian Martinus, 55131 Mainz (DE); UNTHAN, Simon, 55131 Mainz (DE)
(74) Representative: Maiwald GmbH

(57) **Abstract**

The present disclosure is directed to a cartridge for storage of at least one reagent for a reaction in a pharmaceutical process, the cartridge comprising a housing, a cartridge inlet for fluid connection to a fluid supply, in particular a pressurized air supply, a cartridge outlet for fluid connection to and discharge via a reaction vessel, at least one reservoir for storing the reagent, and at least one channel, directly or indirectly and in at least one operational state of the cartridge, fluidly connecting the cartridge inlet, the at least one reservoir and the cartridge outlet.

## Description

### TECHNICAL FIELD

The invention concerns a cartridge for storage of at least one reagent for a reaction in a pharmaceutical process, the use thereof, a method for producing an aseptic cartridge, an aseptic cartridge filled with at least one reagent for a reaction in a pharmaceutical process, the use thereof, a method of carrying out a reaction in a pharmaceutical process, and a reaction apparatus for performing a reaction in a pharmaceutical process.

### BACKGROUND OF THE INVENTION

Often, raw materials for a reaction in a pharmaceutical process may be stored in liquid form, e.g. in containers such as screw cap tubes, blisters, vials, syringes, bags, and reservoirs closed with membranes/films. Alternatively, raw material may be provided in dry form, e.g. as powder.

Such raw materials, also referred to as reagents, may be used for microfluidic RNA production (e.g. using DNA template).

There is a need in such and other pharmaceutical processes to provide for sterility in connection with the raw materials/reagents, also during manufacturing/production.

Improvements as to the reliability, efficiency and costs are desired.

### SUMMARY OF THE INVENTION

The present invention solves this problem and relates to a cartridge for storage of at least one reagent for a reaction in a pharmaceutical process. The cartridge comprises a housing, a cartridge inlet for fluid connection to a fluid supply, optionally a pressurized air supply, a cartridge outlet for fluid connection to and discharge via a reaction vessel, at least one reservoir for storing the reagent, and at least one channel, directly or indirectly and in at least one operational state of the cartridge, fluidly connecting the cartridge inlet, the at least one reservoir and the cartridge outlet.

The present invention provides for a cartridge in which the cartridge inlet, the at least one reservoir and the cartridge outlet are fluidly connected and, thus, allow for internal flow of fluid from the inlet to the outlet of the cartridge, wherein the fluid flows through the reservoir inside the cartridge. When fluid flows through the cartridge, the fluid may expel reagent stored in the reservoir by flowing reagent towards the outlet. Hence, the cartridge is configured to "blast" reagent in the reservoir out of the cartridge, e.g. for subsequent use of the reagent in a reaction outside the cartridge, e.g. when the outlet of the cartridge is fluidly connected to a reaction apparatus. In otherwords, the cartridge may be seen as (configured for) storing reagents, wherein the cartridge comprises integrated reservoir(s) that are to be pressurized for emptying the cartridge.

The cartridge may be seen as allowing for a closed fluid flow (fluid circuit) including connection and displacement of the reagent(s) from the cartridge to a reaction apparatus in which the reagent(s) is/are actually used.

The reservoir(s) and the channel may be provided inside the housing of the cartridge, i.e. may be internal reservoirs and an internal channel.

Specifically, the cartridge may be configured to store, as reagent(s), GMP-relevant raw materials in the cartridge and may, accordingly be configured as a (hermetically) "closed" start material cartridge for GMP processes.

A cartridge/method of the invention may refer to (closed) GMP-compliant manufacturing, in particular for individualized therapies.

The invention offers various improved embodiments. In particular, the cartridge may allow for "closed" storage of the reagent(s) and connection to a manufacturing device/reaction apparatus, without losing the "closed" status. As the reagent(s) in the reservoir(s) may be flow/blown out of the cartridge, a lower dead volume, i.e. lower amount of reagent is wasted, which reduces costs. By connecting the inlet and the outlet of the cartridge with a fluid supply and a reaction vessel, respectively, operation may be efficient as e.g. only two (e.g. aseptic) connections may need to be made for use of the reagent(s) contained in the cartridge. The cartridge design may be flexible as to the specific location of the reservoirs, so that it may be adaptable to different processes. Specifically, flexibility in the location of the reservoirs in the cartridge may entail a flexible valve layout. For example, as the at least one channel fluidly connects to the reservoir, the specific location(s) of the reservoir(s) may be adjustable by adapting the channel(s) accordingly.

Using the cartridge for filling reagent in the cartridge may require a "high quality" clean room, such as a clean room A. A reaction using a cartridge of the invention in a reaction apparatus may take place in a "low quality" clean room, such as class C, as the cartridge may be used to establish a closed and sterile flow path to a reaction apparatus.

Prior art storage solutions may have drawbacks, in particular for individualized therapy manufacturing. For example, many different storage solutions may be needed, handling the risk of losing the "closed" status during the connection process may be challenging and complex, as well as difficulties in precise dosing/metering of small volumes may be experienced. Also, high dead volumes, which result in raw material (reagent) waste, may be unavoidable, in prior art solutions.

The cartridge of the invention may be regarded as a cassette or a chip. The cartridge is configured for a single use and is, hence, disposable. The cartridge may be configured for a micro or milli fluidic chip setup.

Although the cartridge of the invention and particular the reagents are described on the basis of examples pertaining to nucleic acid synthesis and/or enzymatic manufacturing processes, it is applicable to any pharmaceutical process.

The cartridge is configured for sterile/aseptic storage of the at least one reagent in the cartridge.

The inlet is configured for supply of the cartridge with fluid, whilst the outlet is configured for discharge of fluid out of the cartridge. The inlet of the cartridge and the outlet of the cartridge are different entities. Accordingly, the inlet does not at the same time serve as an outlet, in use.

The one or more reagents may be provided as a hydrogel, a liquid or in solid/dry form, such as a powder, for example with grains < 1mm in diameter, and/or granulate.

The one or more reagents may be provided as (immobilized) beads, e.g. magnetic beads, having as size of about 1- 5000 µm diameter, for example. The one or more reagents may be lyophilized, e.g. lyophilized beads, having a size of 1-6 mm in diameter, for example.

The cartridge is configured for a reaction in a reaction apparatus and/or to be used in a reaction in a reaction apparatus. The reaction in the pharmaceutical process may be mixing of reagents and/or forming another substance.

The at least one channel may define a fluid path and/or may be an internal channel, e.g. of at least 500 µm cross-sectional area/hydraulic diameter. A plurality of channels may be provided.

The cartridge may include one or more outlets, e.g. two outlets. For example, the one or more outlets may include a Luer connector or a MicroCNX^{®} connector.

The cartridge may include one or more reservoirs, e.g. at least two reservoirs. A plurality of reservoirs may be comprised in the cartridge.

A reservoir may be configured as a cavity and/or may be embodied as a vial. Specifically, a plurality of reservoirs may be arranged in locations corresponding to those of a micro well plate, e.g. a 96 well plate. This may support automation due to the standard plate format and may help for cost-effective and accurate filling of the reservoirs. In particular, due to the possibility to fill the reservoirs by standard liquid handlers or dosing mechanisms and/or the use of standard seals, as typically used in PCR plate sealers, efficiency and costs may be improved.

Optionally, horizontal dimensions of the cartridge, optionally of the housing, correspond to microplate footprint dimensions according to the ANSI SLAS microplate standard 1-2004 (R2012), i.e. 127.76 mm x 5.48 mm. In some embodiments, the cartridge may have the same footprint as a microplate, so that the same handling tools as used for microplate handling may be used for handling the cartridge. This may allow for more efficient handling and processes.

Optionally, the at least one reservoir is accessible from a top surface of the cartridge. Alternatively or additionally, the cartridge comprises a reservoir opening, optionally in the top surface of the housing. This may allow for access to the reservoir from above. More specifically, the reservoir(s) may be filled from above, e.g. a titration robot, specifically in case of the cartridge having the same footprint as a microplate and/or reservoirs at locations identical to those of a well plate.

Optionally, the cartridge comprises a plurality of said reservoirs, more optionally each of which is, directly or indirectly and in at least one operational state of the cartridge, in fluid communication with the at least one channel.

This may allow for separate storing of a plurality of reagents, e.g. if different reagents are stored in the plurality of reservoirs. For example, one reservoir per reagent may be provided. At least some, optionally all, of the reservoirs and/or of a corresponding reservoir opening per reservoir are positioned equidistant to each other. This may support filling of the reservoirs by means of e.g. a robot.

Optionally, the cartridge comprises at least one, optionally a plurality of, valves for control of the fluid connection between the at least one channel and the cartridge inlet and/or cartridge outlet, and further optionally configured to control the fluid supply via the cartridge inlet and/or a fluid discharge via the cartridge outlet. The valve may, further optionally, be an internal valve or may be accessible from the outside. The valve(s) may be configured for opening and closing of the fluid connection, e.g. between the inlet and the outlet of the cartridge. This may help to efficiently and precisely control a process in a cartridge. The valve(s) may allow for a control of reaction steps, such as supply of reagents in a desired order.

Optionally, the channel may comprise at least two channel sections, wherein the at least two channel sections are, directly or indirectly and in at least one operational state of the cartridge, in fluid communication with the cartridge inlet and/or the cartridge outlet. A channel section may, alternatively, be referred to as a channel. For example, at least two channel sections may be provided for different reactions steps, e.g. in parallel. Optionally, three channel sections may be provided. Optionally, two valves, e.g. one at a confluent junction of the channel sections, may be provided. This may help to more efficiently and precisely control a process in a cartridge.

Optionally, the at least one valve is provided at a bifurcation of the at least two channel sections and the cartridge is configured to selectively establish a fluid path along one channel section. For example, a three-way valve may be provided. Alternatively, a four-way valve may be provided, e.g. fluidly connecting three alternative channels, wherein the channels may optionally run in parallel.

Optionally, two valves, at least two reservoirs, and at least two channel sections are provided, wherein one of the two valves fluidly connects to the cartridge inlet and represents an upstream manifold for the at least two channel sections, and the other one of the two valves fluidly connects to the cartridge outlet and represents a downstream manifold for the at least two channel sections, wherein each of the at least two channel sections fluidly connects to at least a respective one of one of the at least two reservoirs. For example, at least one reservoir, optionally multiple reservoirs may be provided per channel section. Optionally, three channel sections are provided, and/or at least three reservoirs.

Optionally, the at least one reservoir, more optionally the plurality of reservoirs, further optionally each of the reservoirs, has a reservoir inlet for fluid connection to the channel for fluid supply to the reservoir, and a reservoir outlet for connection to the channel for fluid discharge out of the reservoir, and the reservoir is configured such that fluid supply via the reservoir inlet flushes the reservoir via the reservoir outlet. For example, the reservoir inlet and outlet may be at the same or at opposite ends of the reservoir, when seen along the fluid path. This may help to efficiently flow the reagent(s) through the cartridge.

Optionally, the cartridge is made of plastics, more optionally integrally molded and/or at least partially coated on an inside thereof, further optionally inside the at least one channel. This may allow for cost-effective manufacture.

Optionally, one or more channels, optionally all, may comprises at least in parts a hydrophobic coating, and may be configured to restrict fluid communication with the reagent in the one or more reservoir(s). This may help to avoid undesired mixing of reagents, especially if different reagents are contained in different reservoirs.

The cartridge and, thus, reagents contained in the cartridge, may be frozen within the filling station subsequent to the filling. Besides, an integration of (e.g., pneumatically actuated) normally closed valves is conceivable.

Optionally, a volume of the at least one reservoir, optionally of each of a plurality of reservoirs, is between 10 µl to 10 ml. This may be an appropriate maximum amount of fluid for a reaction.

Optionally, the cartridge comprises an identifier for identification of the cartridge, more optionally a visual identifier on an outer surface of the housing, further optionally a binary 2D symbol, more optionally a barcode. This may help to identify a cartridge and, thus, to avoid erroneous use, e.g. order/delivery, of cartridges.

Optionally, the cartridge is (rendered) aseptic. Additionally or alternatively, the cartridge inlet and the cartridge outlet are sealed relative to the surroundings and/or one or more reservoir opening(s) are open relative to, optionally in fluid communication with, the surroundings. This may represent a cartridge before filling with reagent, allowing for efficient subsequent filling of the at least one reservoir(s) with reagent(s).

In a further embodiment, the invention is directed to the use of the cartridge of the invention, for filling the cartridge with at least one a reagent for a reaction in a pharmaceutical process, optionally nucleic acid synthesis, wherein the use comprises filling at least one reagent in the cartridge, optionally through at least one the reservoir opening.

In a further embodiment, the invention is directed to a method for producing an aseptic cartridge comprising/containing at least one reagent for a reaction in a pharmaceutical process, optionally nucleic acid synthesis, the method comprising the following steps in this order in a sterile environment: (1) Providing a sterile cartridge of the invention, (2) dispensing at least one reagent in at least one reservoir, optionally by means of a pipetting robot and/or via a reservoir opening, the reservoir opening optionally located on a top surface of a housing of the cartridge, and (3) sealing the cartridge, optionally the reservoir opening, more optionally with a foil or film. By doing so, a closed/sealed cartridge may efficiently be obtained. A sterile environment may be a cleanroom. A reservoir opening and/or the top surface may be sealed with PCR foil. Sealing the cartridge may mean sealing the top surface of the housing of the cartridge.

Optionally, the reagent(s) is/are configured for nucleic acid synthesis, e.g. enzymatic manufacturing processes, more optionally selected from a group consisting of a template, at least one enzyme, a buffer, and at least one nucleotide triphosphate.

Different (types of) reagents may be used, e.g. in different channel sections. A reagent may be a master mix, while another reagent may be configured for (in)activating substances, optionally at least one activating substance and at least one inactivating substance.

Reagents may include purified linear DNA template, e.g. containing a promoter, ribonucleotide triphosphates, a buffer that optionally includes DTT and magnesium ions, and RNA polymerase.

More specific examples of reagents are nucleotide triphosphates ((d)NTPs), (DNA) template; (RNA) polymerase(s); buffer; and co-factors for the polymerase(s).

Reagents may be aqueous solutions with moderate pH. Reagents may contain up to 50% glycerol. The amounts of the reagents received per reservoir may typically range from 200 µL to 2.5 mL.

Optionally, the method comprises the step of freezing the cartridge after sealing the cartridge. This may allow for reliable and long storage of reagent(s) in the cartridge. Specifically, for enzymatic manufacturing processes, for example, reagent may be stored in a closed and sterile manner and then added/used at convenience, due to the ability to freeze and thaw the cartridge.

Optionally, the method further comprises the step of packaging and/or labelling the cartridge, optionally after freezing of the cartridge. This may allow for reliable storage and avoid errors.

Optionally, the method comprises the step of weighting the cartridge after filling with reagent. This may allow for efficient quality control.

Optionally, the cartridge includes a plurality of said reservoirs and the method includes filling a reagent according to the invention in each reservoir, wherein optionally the reagent per reservoir differs from each other. In other words, each reservoir may be filled with a reagent which differs from the reagent of any other reservoir of the cartridge.

In a further embodiment, the invention is directed to an aseptic cartridge filled with at least one reagent for a reaction in a pharmaceutical process, optionally nucleic acid synthesis, the cartridge comprising the cartridge the invention, wherein the reagent is stored in the at least one reservoir; and the reservoir opening, the cartridge inlet and the cartridge outlet are closed, optionally sealed, relative to the surroundings. Accordingly, a pre-filled cartridge (prefilled with reagent(s)) closed and/or sterile is provided. Such cartridge may allow for reliable, safe and quick use in manufacture.

In a further embodiment, the invention is directed to the use of an aseptic cartridge filled with at least one reagent of the invention in a reaction apparatus for a reaction in a pharmaceutical process, optionally nucleic acid synthesis, wherein the use comprises connecting the cartridge inlet to a supply connector, and the cartridge outlet to a reaction connector of the reaction apparatus. This may provide for reliable use in a reaction apparatus, while preserving the sterility of the cartridge and/or the process.

Optionally, the use further comprises establishing a fluid communication of the at least one reservoir with a pressurized air supply via the supply connector at least in one operational state of the cartridge, and establishing fluid communication of the at least one reservoir with a reaction vessel via the reaction connector at least in another operational state of the cartridge. This may allow for reliable and efficient processes.

Optionally, the cartridge is used for establishing at least one selective reaction step, optionally of a nucleic acid synthesis, more optionally including mixing of at least one nucleotide triphosphate, a buffer and/or at least one enzyme. This may represent an effective use of the cartridge.

Optionally, the cartridge is connected via the cartridge inlet to a fluid supply for supply with fluid, and via the cartridge outlet to a reaction vessel for discharge of the at least one reagent into a reagent vessel, and a fluid communication from the fluid supply to the at least one reservoir and a fluid communication from the at least one reservoir to the reaction vessel is being established. This may represent an effective use of the cartridge.

Optionally, fluid is supplied to the cartridge, wherein, for fluid communication between the fluid supply, the at least one reservoir and the reaction vessel; at least one valve in fluid communication with the channel is opened and/or closed so as to selectively establish a fluid path along the channel. This allows for reliable control of the process.

In a further embodiment, the invention is directed to a method of carrying out a reaction in a pharmaceutical process, optionally a nucleic acid synthesis, comprising the following steps in a sterile environment and in a closed fluid path: (1) providing an aseptic cartridge filled with at least one reagent of a described above, and (2) performing the reaction including the at least one reagent in a reaction vessel, wherein, in a first reaction step, optionally a transcription, a first channel section of the cartridge is flushed; in an optional second reaction step, optionally an inactivation, a second channel section of the cartridge is flushed; and in an optional third reaction step, optionally an enzyme inactivation, a third channel section of the cartridge is flushed. This may be a preferred use of the cartridge regarding the connection to apparatus, as described above.

In a further embodiment, the invention is directed to a reaction apparatus for performing a reaction in a pharmaceutical process and for establishing a closed fluid path with a cartridge filled with at least one reagent, optionally the cartridge of the invention, optionally for nucleic acid synthesis, the apparatus comprising a receptacle for support of the cartridge, a fluid supply configured to selectively adjust the pressure and/or flow rate of the fluid to be supplied, a supply connector in fluid communication with the fluid supply and for connection to a cartridge inlet of the cartridge, a reaction vessel, and a reaction connector in fluid communication with the reaction vessel and for connection to a cartridge outlet of the cartridge for establishing fluid communication with the cartridge for discharge of the at least one reagent into the reaction vessel. If the connectors are sterile, a sterile/closed fluid path may be established. The supply connector may be for supply of liquid or gas; e.g. pressurized air, which may represent a fluid supply/source.

Optionally, the reaction apparatus further comprises cooling/heating means for cooling/heating the cartridge, in particular the at least one reagent in the at least one reservoir. This may promote a reaction.

Optionally, the reaction apparatus further comprises at least one sensor for determining the temperature of the at least one reagent, optionally in the at least one reservoir. This may help for stable reaction.

Detailed embodiments and further advantages and features related to the present invention are described in the following, wherein these examples shall not be regarded as limiting the invention.

### BRIEF DESCRIPTION OF THE DRAWINGS

Fig. 1 schematically shows a reaction apparatus of an embodiment of the invention in which a cartridge of an embodiment of the invention is received.
Fig. 2(a) schematically shows a cross-sectional view of a cartridge of an embodiment of the invention.
Fig. 2(b) schematically shows a side view of a cartridge of another embodiment of the invention.
Fig. 3(a) schematically shows a cross-sectional view of a cartridge of an embodiment of the invention.
Fig. 3(b) schematically shows a perspective view of a cartridge of an embodiment of the invention.
Fig. 4 shows steps of a method for producing an aseptic cartridge of an embodiment of the invention.

### DETAILED DESCRIPTION OF THE INVENTION

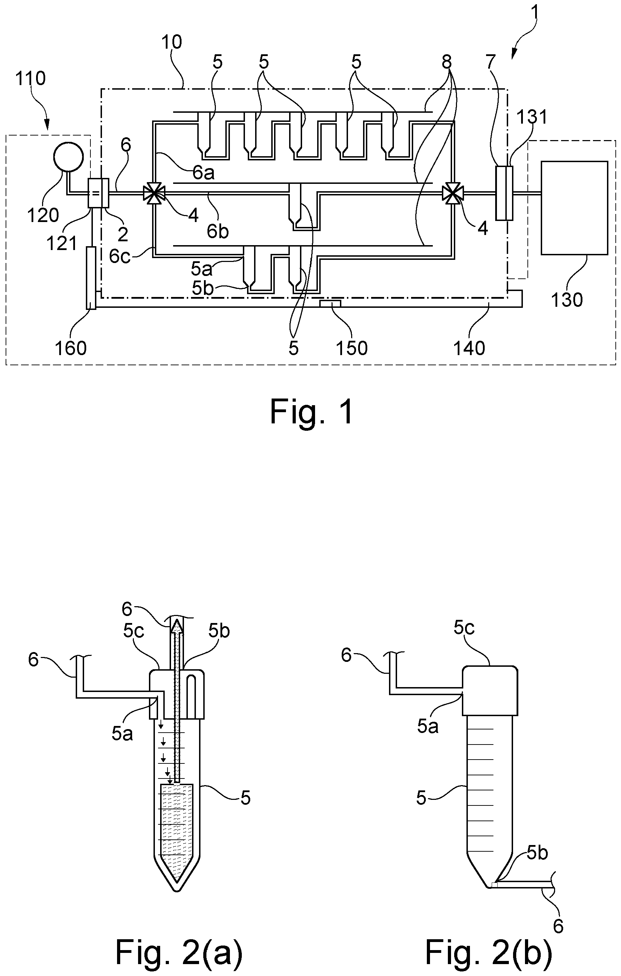

Fig. 1 shows a reaction apparatus 110 and a cartridge 1 of the invention. The cartridge 1 is received in the reaction apparatus 110.

The cartridge 1 comprises a housing 10, a cartridge inlet 2 for fluid connection to a fluid supply 120, here a pressurized air supply, a cartridge outlet 7 for fluid connection to and discharge via a reaction vessel 130, a plurality of reservoirs 5 for storing the reagent(s), and three channels 6, directly or indirectly fluidly connecting the cartridge inlet 2, the reservoirs 5 and the cartridge outlet 7. More specifically, the channel 6 comprises three channel sections 6a, 6b, 6c, wherein the three channels sections 6a, 6b, 6c are in fluid communication with the cartridge inlet 2 and the cartridge outlet 7. The plurality of said reservoirs 8 are each in fluid communication with the inlet 2 and the outlet 7.

The cartridge 1 further comprises a first four-way valve 4 for control of the fluid connection between the cartridge inlet 2 and the channel 6. Accordingly, the first valve 4 controls fluid supply via the cartridge inlet 2. More specifically, the first valve 4 is provided at a furcation of the three channel sections 6a, 6b, 6c. Accordingly, by way of the first valve 4, the cartridge 1 is configured to selectively establish a fluid path along each of the channel section 6a, 6b, 6c, from the inlet 2.

The cartridge 1 further comprises a second four-way valve 4 for control of the fluid connection between the channel 6 and the cartridge outlet 7. Accordingly, the second valve 4 controls fluid discharge via the cartridge outlet 7. More specifically, the second valve 4 is provided at a joint of the three channel sections 6a, 6b, 6c. Accordingly, by way of the second valve 4, the cartridge 1 is configured to selectively establish a fluid path along each of the channel section 6a, 6b, 6c, to the outlet 7.

In Fig. 1, two valves 4, namely first and second valves, eight reservoirs 5, and three channel sections 6a, 6b, 6c are shown. The first valve 4 fluidly connects to the cartridge inlet 2 and represents an upstream manifold for the three channel sections 6a, 6b, 6c, and the second valve 4 fluidly connects to the cartridge outlet 7 and represents a downstream manifold for the three channel sections 6a, 6b, 6c.

The channel sections 6a, 6b, 6c fluidly connect to the reservoirs 5. More specifically, the first channel section 6a fluidly connects to first to fifth reservoirs 5, i.e. represents a fluid path/line including four reservoirs 5. The second channel section 6b fluidly connects to a sixth reservoir 5, i.e. represents a fluid path/line including one reservoir 5. The third channel section 6c fluidly connects to the seventh and eighth reservoirs 5, i.e. represents a fluid path/line including two reservoirs 5. Accordingly, each channel section 6a, 6b, 6c establishes a fluid path between the inlet 2 and the outlet 7, if the first and/or second valves 4 are in a corresponding operational state.

Fig. 1 further shows the reaction apparatus 110 of the invention, for performing a reaction in a pharmaceutical process and for establishing a closed fluid path with a cartridge 1 filled with at least one reagent. The reaction may be for nucleic acid synthesis. The apparatus 110 may be located in a clean room class C.

The apparatus 110 comprises a receptacle 140 for support of the cartridge 1, a fluid supply 120 configured to selectively adjust the pressure and/or flow rate of the fluid to be supplied, a supply connector 121 in fluid communication with the fluid supply 120 and for connection to a cartridge inlet 2 of the cartridge 1, a reaction vessel 130, and a reaction connector 131 in fluid communication with the reaction vessel 130 and for connection to a cartridge outlet 7 of the cartridge 1. Accordingly, fluid communication with the cartridge 1 for discharge of the at least one reagent into the reaction vessel 130 is established.

The reaction apparatus 110 comprises cooling/heating means 160 for cooling/heating the cartridge. More specifically, the at least one reagent in the at least one reservoir 5 is cooled. Further, the apparatus 110 comprises a sensor 150 for determining the temperature of the at least one reagent, more specifically in a reservoir 5.

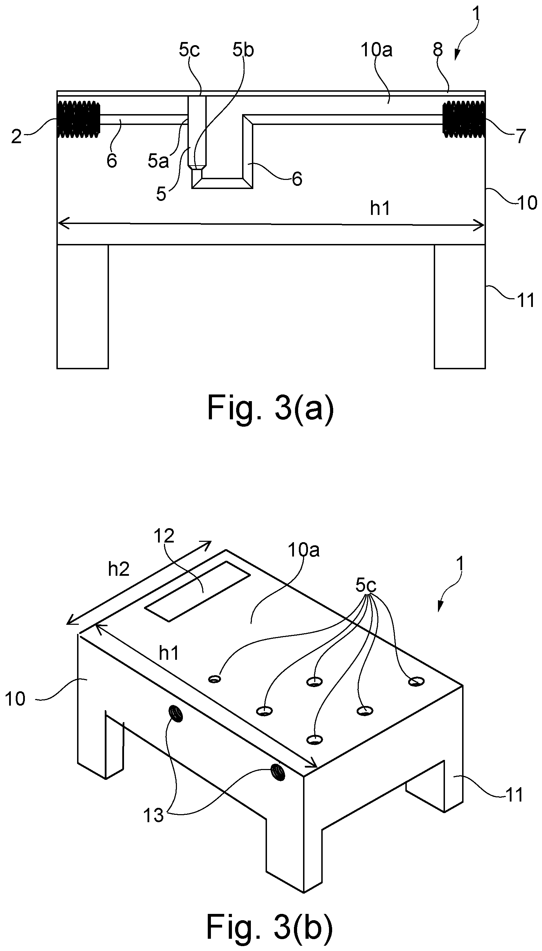

With reference to Fig. 3(a), the reservoirs 5 are accessible from a top surface 10a of the cartridge 1 by means of a reservoir opening 5c at the top surface 10a of the housing 10, when no sealing film 8 is provided. The exposed openings 5c form openings in the top surface 10a.

The cartridge inlet 2 and the cartridge outlet 7 are sealed relative to the surroundings in the state shown in Fig. 3(a), namely for storage.

Fig. 3(a) shows the state after reagent has been filled into the reservoir 5, and the reservoir openings 5c have been covered. Specifically, a sealing film or foil 8 is sealed to the (here: entire) top surface 10a of the cartridge housing 10, extending along all reservoir openings 5c of the cartridge 1, wherein only a single reservoir 5 and corresponding opening 5c is shown in Fig. 3(a). Also, Fig. 1 shows the sealing film 8 on each of the reservoirs 5.

Alternatively, the reservoir opening 5c may be open relative to the surroundings. This is indicated in Fig. 3(b), in which the openings 5c are exposed and not covered, e.g. by a film 8. In such state, the cartridge 1 may be stored for later filling with reagent.

Fig. 2(a), 2(b) and 3(a) each show a reservoir 5 having a reservoir inlet 5a fluidly connected to the channel 6 at the side of the inlet 2 for fluid supply to the reservoir 5, and a reservoir outlet 5b fluidly connected to the channel 6 at the side of the outlet 7 for fluid discharge out of the reservoir 5. Accordingly, the reservoir 5 (and the remaining cartridge 1) is configured such that fluid supply via the reservoir inlet 5a flushes the reservoir 5 via the reservoir outlet 5b.

While Fig. 2(a) shows a reservoir 5 having an outlet 5b and a channel 6 at the upper side of the reservoir, i.e. on the top of the reservoir, Fig. 2(b) shows a reservoir 5 having an outlet 5b and a channel 6 at the lower side of the reservoir, i.e. at the bottom of the reservoir. In both Figures, the reservoir opening 5c is at the upper side of the reservoir, i.e. on the top of the reservoir. In Fig. 2(a), the flow of fluid supplied via the reservoir inlet 5a is indicated with small arrows, and the flow of reagent contained in the reservoir 5 out through the reservoir outlet 5b is indicated with the larger arrow. In Fig. 1, it is indicated that an upstream reservoir 5 and a downstream reservoir 5 can be connected by a channel 6 from an outlet 5b at a lower end of the upstream reservoir 5, to an inlet 5a at an upper end of the downstream reservoir 5.

As shown in Fig. 3(a) and 3(b), the housing 10 of the cartridge 1 integrates the reservoirs 5, the channel 6, the inlet 2 and the outlet 7. Accordingly, the housing 10 provides for an internal fluid connection between the reservoirs 5 via the internal channel 6. The housing 10 may be seen as providing sealing against the surroundings, while allowing for deliberate external access/connection in a sealed manner via the reservoir openings 5 for filling of reagent into the reservoirs, and via the inlet 2 and outlet 7 for connection to a reaction apparatus 110.

Fig. 3(b) shows that horizontal dimensions, i.e. the length h1 and the width h2 of the cartridge 1, e.g. of the housing 10, correspond to a microplate footprint dimensions according to the ANSI SLAS microplate standard 1-2004 (R2012), i.e. 127.76 mm x 5.48 mm.

Fig. 3(a) and 3(b) show that the cartridge may have a generally rectangular configuration defined by the length h1 and the width h2 of the cartridge 1. Further, a support 11, here in the form of four legs, one leg per corner of the cartridge, may be provided.

Fig. 3(b) further shows connection ports 13 at the side surface of the housing 10 for optional connection to further entities.

Also, the regular distribution of the reservoirs 5 and corresponding reservoir openings 5c at the top surface 10 of the housing 10 is indicated in Fig. 3(b). Such arrangement may correspond to MTP (Module Type Package) layout to ease filling.

The cartridge 1 is made of plastics, here integrally molded. The channel 6 comprises at least in parts a hydrophobic coating, and is configured to restrict fluid communication with the reagent in the reservoirs 5. In particular, the coating may restrict wetting of the inner surface of the channel 6 with reagent, which avoids escape of reagent out of the respective reservoir 5.

A volume of each of a plurality of reservoirs 5 is e.g. between 10 µl to 10 ml. Accordingly, a maximum amount of between 10 µl to 10 ml reagent may be contained in each of the reservoirs 5. Fig. 2(a) and 2(b) indicate that the reservoirs may have a scale indicating the amount of reagent comprised in the reservoir 5.

Fig. 3(b) shows that the cartridge 1 comprises an identifier 12 for identification of the cartridge. The identifier is a visual identifier 12 on the outer surface of the housing 10, namely the top surface of the housing 10. It is not shown in Fig. 3(b) that the identifier 12 may be a binary 2D symbol, namely a barcode.

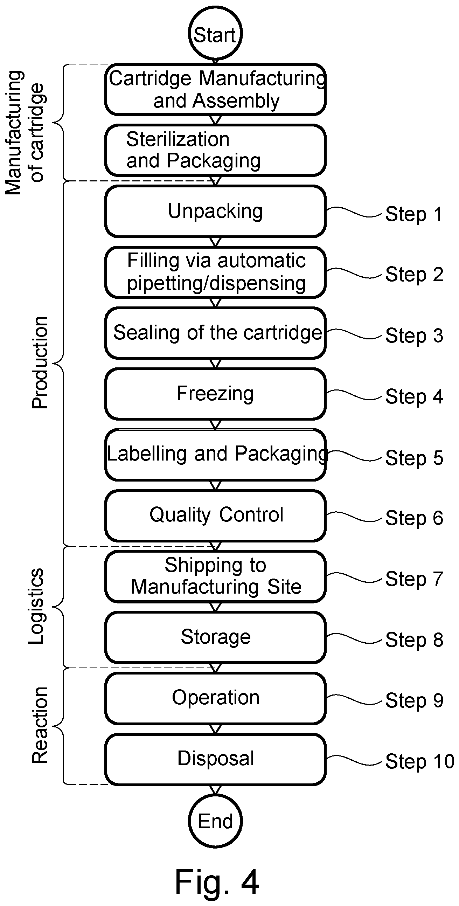

Fig. 4 shows manufacturing steps, as detailed in the following, for (closed) GMP-compliant manufacturing, in particular for individualized therapies, on the basis of the cartridge 1.

Initially, the cartridge 1 is manufactured and assembled. This may include (gamma) sterilization and subsequent packaging of the cartridge 1.

In Step 1, the cartridge 1 is unpacked. Hence, a sterile cartridge 1 of the invention is provided.

In Step 2, reagent(s) is/are filled in, i.e. dispensed in the reservoir(s) 5 of the cartridge 1. This may be done by automatic pipetting into the reservoir(s) If the cartridge 1 includes a plurality of reservoirs 5, the reagent per reservoir 5 may differ from each other.

The reagent(s) is/are configured for nucleic acid synthesis, optionally selected from a group consisting of a template, at least one enzyme, a buffer, and at least one nucleotide triphosphate.

In Step 3, the cartridge 1 is sealed, in particular the reservoir openings 5c are sealed. This may be done by covering the openings 5c with a foil or film 8. By doing so, the reservoir opening 5c, the cartridge inlet 2 and the cartridge outlet 7 are closed and sealed, relative to the surroundings.

In Step 4, the cartridge 1 is frozen or thawed after sealing the cartridge 1, e.g. at -20°C.

In Step 5, the cartridge is packed and labelled, e.g. by means of the identifier 12.

As a quality control measure, the cartridge 1 may be weighted in Step 6.

In subsequent logistic measures, the cartridge 1 may be shipped to the manufacturing site, including Step 7 of shipping and Step 8 of storage. The order of Steps 7 and 8 may be changed, or the cartridge 1 may be stored before shipping. A minimum storage time may be 2 years.

The actual use of the cartridge 1 for the reaction takes place in Step 9, namely the operation in the reaction vessel 130, followed by final a Step 10, the disposal of the cartridge 1. The use comprises connecting the cartridge inlet 2 to a supply connector 121, and the cartridge outlet 7 to a reaction connector 131 of the reaction apparatus 110. Fluid communication of the at least one reservoir 5 with a pressurized air supply 120 via the supply connector 121 at least in one operational state of the cartridge is established, and fluid communication of the at least one reservoir 5 with a reaction vessel 130 via the reaction connector 13 at least in another operational state of the cartridge is established. At least one selective reaction step of a nucleic acid synthesis, includes mixing of at least one nucleotide triphosphate, a buffer and/or at least one enzyme is performed.

For fluid communication between the fluid supply 120, the at least one reservoir 5 and the reaction vessel 130, at least one valve 4 in fluid communication with the channel 6 is opened and/or closed so as to selectively establish a fluid path along the channel 6, during the reaction process. In a first reaction step, optionally a transcription, a first channel section 6a of the cartridge 5 is flushed; in a second reaction step, optionally an inactivation, a second channel section 6b of the cartridge is flushed; and in a third reaction step, optionally an enzyme inactivation, a third channel section 6c of the cartridge is flushed.

More specifically, before executing the manufacturing process, the cartridge 1 is connected to the manufacturing equipment, e.g. the reaction apparatus 110 via an aseptic connector (e.g. the supply connector 121) in a cleanroom C environment. The reagents are then discharged from the cartridge 1 and introduced into the reaction vessel 130 in the correct amount and at the right time through the resulting connection, simply by suppling fluid to the cartridge inlet 2. After completion of the production, the cartridge 1 is disposed of together with the single-use system of the manufacturing equipment, such as the supply connector 121.

The present invention also relates to the following items, as numbered embodiments:
1. Cartridge (1) for storage of at least one reagent for a reaction in a pharmaceutical process, the cartridge (1) comprising
   a housing (10),
   a cartridge inlet (2) for fluid connection to a fluid supply (120), in particular a pressurized air supply,
   a cartridge outlet (7) for fluid connection to and discharge via a reaction vessel (130),
   at least one reservoir (5) for storing the reagent, and
   at least one channel (6), directly or indirectly and in at least one operational state of the cartridge, fluidly connecting the cartridge inlet (2), the at least one reservoir (5) and the cartridge outlet (7).
2. Cartridge of item 1, wherein horizontal dimensions of the cartridge (1), in particular of the housing (10), correspond to microplate footprint dimensions according to the ANSI SLAS microplate standard 1-2004 (R2012), i.e. 127.76 mm x 5.48 mm.
3. Cartridge of item 1 or 2, wherein the at least one reservoir (5) is accessible from a top surface (10a) of the cartridge (1) and/or the cartridge comprises a reservoir opening (5c), optionally in the top surface (10a) of the housing (10).
4. Cartridge of any of the preceding items, comprising a plurality of said reservoirs (5), optionally each of which is, directly or indirectly and in at least one operational state of the cartridge, in fluid communication with the at least one channel (6).
5. Cartridge of any of the preceding items, further comprising at least one valve (4) for control of the fluid connection between the at least one channel (6) and the cartridge inlet (2) and/or cartridge outlet (7), and optionally configured to control the fluid supply via the cartridge inlet (2) and/or a fluid discharge via the cartridge outlet (7).
6. Cartridge of any of the preceding items, the channel (6) comprising at least two channels sections (6a, 6b, 6c), wherein the at least two channels sections are, directly or indirectly and in at least one operational state of the cartridge, in fluid communication with the cartridge inlet (2) and/or the cartridge outlet (7).
7. Cartridge of items 5 and 6, wherein the at least one valve (4) is provided at a bifurcation of the at least two channel sections (6a, 6b, 6c) and the cartridge is configured to selectively establish a fluid path along one channel section.
8. Cartridge of any of the preceding items 4 to 7, wherein two valves (4), at least two reservoirs (5), and at least two channel sections (6a, 6b, 6c) are provided, wherein one of the two valves (4) fluidly connects to the cartridge inlet (2) and represents an upstream manifold for the at least two channel sections (6a, 6b, 6c), and the other one of the two valves (4) fluidly connects to the cartridge outlet (7) and represents a downstream manifold for the at least two channel sections (6a, 6b, 6c), wherein each of the at least two channel sections (6a, 6b, 6c) fluidly connects to at least a respective one of one of the at least two reservoirs (5).
9. Cartridge of any of the preceding items, wherein the at least one reservoir (5), optionally the plurality of reservoirs (5), further optionally each of the reservoirs (5), has a reservoir inlet (5a) for fluid connection to the channel (6) for fluid supply to the reservoir (5), and a reservoir outlet (5b) for connection to the channel (6) for fluid discharge out of the reservoir (5), and the reservoir (5) is configured such that fluid supply via the reservoir inlet (5a) flushes the reservoir (5) via the reservoir outlet (5b).
10. Cartridge of any of the preceding items, wherein the cartridge is made of plastics, optionally integrally molded and/or at least partially coated on an inside thereof, optionally inside the at least one channel (6).
11. Cartridge of any of the preceding items, wherein the at least one channel (6) comprises at least in parts a hydrophobic coating, and is configured to restrict fluid communication with the reagent in the at least one reservoir (5).
12. Cartridge of any of the preceding items, wherein a volume of the at least one reservoir (5), optionally of each of a plurality of reservoirs (5), is between 10 µl to 10 ml.
13. Cartridge of any of the preceding items, further comprising an identifier (12) for identification of the cartridge, optionally a visual identifier on an outer surface of the housing (10), further optionally a binary 2D symbol, more optionally a barcode.
14. Cartridge of any of the preceding items, optionally aseptic, wherein the cartridge inlet (2) and the cartridge outlet (7) are sealed relative to the surroundings and/or the reservoir opening (5c) is open relative to, optionally in fluid communication with, the surroundings.
15. Use of a cartridge of any of the preceding items for filling with at least one a reagent for a reaction in a pharmaceutical process, optionally nucleic acid synthesis, wherein the use comprises filling at least one reagent in at least one reservoir (5), optionally through a reservoir opening (5c).
16. Method for producing an aseptic cartridge (1) comprising at least one reagent for a reaction in a pharmaceutical process, optionally nucleic acid synthesis, the method comprising the following steps in this order in a sterile environment:
   providing a sterile cartridge (1) of any of the preceding items 1 to 14,
   dispensing at least one reagent in at least one reservoir (5), optionally by means of a pipetting robot and/or via a reservoir opening (5c), optionally located on a top surface (10a) of a housing (10) of the cartridge, and
   sealing the cartridge, in particular the reservoir opening (5c), optionally with a foil or film.
17. Method of item 16, wherein the reagent(s) is/are configured for nucleic acid synthesis, optionally selected from a group consisting of a template, at least one enzyme, a buffer, and at least one nucleotide triphosphate.
18. Method of item 16 or 17, further comprising the step of freezing the cartridge after sealing the cartridge.
19. Method of any of items 16 to 18, further comprising the step of packaging and/or labelling the cartridge, optionally after freezing of the cartridge.
20. Method of any of items 16 to 19, further comprising the step of weighting the cartridge (1) after filling with reagent.
21. Method of any of the preceding items 16 to 20, wherein the cartridge includes a plurality of said reservoirs (5) and the method includes filling a reagent according to item 17 in each reservoir, wherein optionally the reagent per reservoir differ from each other.
22. Aseptic cartridge (1) filled with at least one reagent for a reaction in a pharmaceutical process, optionally nucleic acid synthesis, the cartridge comprising the cartridge of any of the preceding items 1 to 14, wherein the reagent is stored in the at least one reservoir (5), and the reservoir opening (5c), the cartridge inlet (2) and the cartridge outlet (7) are closed, optionally sealed, relative to the surroundings.
23. Aseptic cartridge of item 22, wherein the at least one reagent is configured for nucleic acid synthesis, optionally selected from a group consisting of a template, at least one enzyme, a buffer, and at least one nucleotide triphosphate.
24. Use of an aseptic cartridge filled with at least one reagent of item 22 or 23 in a reaction apparatus (110) for a reaction in a pharmaceutical process, optionally nucleic acid synthesis, wherein the use comprises connecting the cartridge inlet (2) to a supply connector (121), and the cartridge outlet (7) to a reaction connector (131) of the reaction apparatus (110).
25. Use of the cartridge of item 24, further comprising establishing a fluid communication of the at least one reservoir (5) with a pressurized air supply (120) via the supply connector (121) at least in one operational state of the cartridge, and establishing fluid communication of the at least one reservoir (5) with a reaction vessel (130) via the reaction connector (131) at least in another operational state of the cartridge.
26. Use of the cartridge of item 24 or 25, wherein the cartridge (1) is used for establishing at least one selective reaction step, optionally of a nucleic acid synthesis, more optionally including mixing of at least one nucleotide triphosphate, a buffer and/or at least one enzyme.
27. Use of the cartridge of any of items 24 to 26, wherein the cartridge (1) is being connected via the cartridge inlet (2) to a fluid supply (120) for supply with fluid, and via the cartridge outlet (7) to a reaction vessel (130) for discharge of the at least one reagent into a reagent vessel (130), and a fluid communication from the fluid supply (120) to the at least one reservoir (5) and a fluid communication from the at least one reservoir (5) to the reaction vessel (130) is being established.
28. Use of the cartridge of any of items 24 to 27, wherein fluid is supplied to the cartridge (1), wherein, for fluid communication between the fluid supply (120), the at least one reservoir (5) and the reaction vessel (130), at least one valve (4) in fluid communication with the channel (6) is opened and/or closed so as to selectively establish a fluid path along the channel (6).
29. Method of carrying out a reaction in a pharmaceutical process, optionally a nucleic acid synthesis , comprising the following steps in a sterile environment and in a closed fluid path:
   providing an aseptic cartridge (1) filled with at least one reagent of item 22 or 23, and
   performing the reaction including the at least one reagent in a reaction vessel (130),
   wherein, in a first reaction step, optionally a transcription, a first channel section (6a) of the cartridge is flushed; in an optional second reaction step, optionally an inactivation, a second channel section (6b) of the cartridge is flushed;
   and in an optional third reaction step, optionally an enzyme inactivation, a third channel section (6c) of the cartridge is flushed.
30. Reaction apparatus (110) for performing a reaction in a pharmaceutical process and for establishing a closed fluid path with a cartridge (1) filled with at least one reagent, optionally the cartridge of item 22 or 23, optionally for nucleic acid synthesis, the apparatus comprising
   a receptacle (140) for support of the cartridge (1),
   a fluid supply (120) configured to selectively adjust the pressure and/or flow rate of the fluid to be supplied,
   a supply connector (121) in fluid communication with the fluid supply (120) and for connection to a cartridge inlet (2) of the cartridge (1),
   a reaction vessel (130), and
   a reaction connector (131) in fluid communication with the reaction vessel (130) and for connection to a cartridge outlet (7) of the cartridge (1) for establishing fluid communication with the cartridge (1) for discharge of the at least one reagent into the reaction vessel (130).
31. Reaction apparatus of item 30, further comprising cooling/heating means (160) for cooling/heating the cartridge (1), in particular the at least one reagent in the at least one reservoir (5).
32. Reaction apparatus of item 30 or 31, further comprising at least one sensor (150) for determining the temperature of the at least one reagent, optionally in the at least one reservoir (5).

The detailed description of the invention is provided with respect to the embodiments depicted in the drawings. Obvious variations and alternatives may occur to the skilled person, based on the summary of the invention. These variations and alternatives are part of the invention in so far they are covered by the appended claims.

### REFERENCE SIGNS

- 1: Cartridge/cassette
- 2: Cartridge inlet
- 3: Filter
- 4: Valve
- 5: Reservoir
- 5a: Reservoir inlet
- 5b: Reservoir outlet
- 5c: Reservoir opening
- 6: Channel
- 6a, 6b, 6c: Channel section
- 7: Cartridge outlet
- 8: Sealing film/foil
- 9: Pressure connector
- 10: Housing
- 10a: Top surface
- 11: Support
- 12: Identifier
- 13: Connection port

- 110: Reaction apparatus
- 120: Fluid/ or pressurized air supply
- 121: Supply connector
- 130: Reaction vessel
- 131: Reaction connector
- 140: Receptacle
- 150: Temperature sensor
- 160: Heating/cooling means

- h1, h2: Length and width of cartridge

## Claims

1. Cartridge (1) for storage of at least one reagent for a reaction in a pharmaceutical process, the cartridge (1) comprising
a housing (10),
a cartridge inlet (2) for fluid connection to a fluid supply (120), in particular a pressurized air supply,
a cartridge outlet (7) for fluid connection to and discharge via a reaction vessel (130),
at least one reservoir (5) for storing the reagent, and
at least one channel (6), directly or indirectly and in at least one operational state of the cartridge, fluidly connecting the cartridge inlet (2), the at least one reservoir (5) and the cartridge outlet (7).

2. Cartridge of claim 1, wherein horizontal dimensions of the cartridge (1), in particular of the housing (10), correspond to microplate footprint dimensions according to the ANSI SLAS microplate standard 1-2004 (R2012), i.e. 127.76 mm x 5.48 mm.

3. Cartridge of claim 1 or 2, wherein the at least one reservoir (5) is accessible from a top surface (10a) of the cartridge (1) and/or the cartridge comprises a reservoir opening (5c), optionally in the top surface (10a) of the housing (10).

4. Cartridge of any of the preceding claims,
comprising a plurality of said reservoirs (5), optionally each of which is, directly or indirectly and in at least one operational state of the cartridge, in fluid communication with the at least one channel (6),
and/or
further comprising at least one valve (4) for control of the fluid connection between the at least one channel (6) and the cartridge inlet (2) and/or cartridge outlet (7), and optionally configured to control the fluid supply via the cartridge inlet (2) and/or a fluid discharge via the cartridge outlet (7),
and/or
the channel (6) comprising at least two channels sections (6a, 6b, 6c), wherein the at least two channels sections are, directly or indirectly and in at least one operational state of the cartridge, in fluid communication with the cartridge inlet (2) and/or the cartridge outlet (7),
and/or
wherein the at least one valve (4) is provided at a bifurcation of the at least two channel sections (6a, 6b, 6c) and the cartridge is configured to selectively establish a fluid path along one channel section,
and/or
wherein two valves (4), at least two reservoirs (5), and at least two channel sections (6a, 6b, 6c) are provided, wherein one of the two valves (4) fluidly connects to the cartridge inlet (2) and represents an upstream manifold for the at least two channel sections (6a, 6b, 6c), and the other one of the two valves (4) fluidly connects to the cartridge outlet (7) and represents a downstream manifold for the at least two channel sections (6a, 6b, 6c), wherein each of the at least two channel sections (6a, 6b, 6c) fluidly connects to at least a respective one of one of the at least two reservoirs (5),
and/or
the at least one reservoir (5), optionally the plurality of reservoirs (5), further optionally each of the reservoirs (5), has a reservoir inlet (5a) for fluid connection to the channel (6) for fluid supply to the reservoir (5), and a reservoir outlet (5b) for connection to the channel (6) for fluid discharge out of the reservoir (5), and the reservoir (5) is configured such that fluid supply via the reservoir inlet (5a) flushes the reservoir (5) via the reservoir outlet (5b).

5. Cartridge of any of the preceding claims,
wherein the cartridge is made of plastics, optionally integrally molded and/or at least partially coated on an inside thereof, optionally inside the at least one channel (6),
and/or
wherein the at least one channel (6) comprises at least in parts a hydrophobic coating, and is configured to restrict fluid communication with the reagent in the at least one reservoir (5),
and/or
wherein a volume of the at least one reservoir (5), optionally of each of a plurality of reservoirs (5), is between 10 µl to 10 ml.

6. Cartridge of any of the preceding claims, further comprising an identifier (12) for identification of the cartridge, optionally a visual identifier on an outer surface of the housing (10), further optionally a binary 2D symbol, more optionally a barcode.

7. Cartridge of any of the preceding claims, optionally aseptic, wherein the cartridge inlet (2) and the cartridge outlet (7) are sealed relative to the surroundings and/or the reservoir opening (5c) is open relative to, optionally in fluid communication with, the surroundings.

8. Use of a cartridge of any of the preceding claims for filling with at least one a reagent for a reaction in a pharmaceutical process, optionally nucleic acid synthesis, wherein the use comprises filling at least one reagent in at least one reservoir (5), optionally through a reservoir opening (5c).

9. Method for producing an aseptic cartridge (1) comprising at least one reagent for a reaction in a pharmaceutical process, optionally nucleic acid synthesis, the method comprising the following steps in this order in a sterile environment:
providing a sterile cartridge (1) of any of the preceding claims 1 to 7,
dispensing at least one reagent in at least one reservoir (5), optionally by means of a pipetting robot and/or via a reservoir opening (5c), optionally located on a top surface (10a) of a housing (10) of the cartridge, and
sealing the cartridge, in particular the reservoir opening (5c), optionally with a foil or film.

10. Method of claim 9, wherein the reagent(s) is/are configured for nucleic acid synthesis, optionally selected from a group consisting of a template, at least one enzyme, a buffer, and at least one nucleotide triphosphate,
and/or
comprising the step of freezing the cartridge after sealing the cartridge,
and/or
comprising the step of packaging and/or labelling the cartridge, optionally after freezing of the cartridge,
and/or
comprising the step of weighting the cartridge (1) after filling with reagent.

11. Method of any of the preceding claims 9 and 10, wherein the cartridge includes a plurality of said reservoirs (5) and the method includes filling a reagent according to claim 10 in each reservoir, wherein optionally the reagent per reservoir differ from each other.

12. Aseptic cartridge (1) filled with at least one reagent for a reaction in a pharmaceutical process, optionally nucleic acid synthesis, the cartridge comprising the cartridge of any of the preceding claims 1 to 7, wherein the reagent is stored in the at least one reservoir (5), and the reservoir opening (5c), the cartridge inlet (2) and the cartridge outlet (7) are closed, optionally sealed, relative to the surroundings,
optionally wherein the at least one reagent is configured for nucleic acid synthesis, optionally selected from a group consisting of a template, at least one enzyme, a buffer, and at least one nucleotide triphosphate.

13. Use of an aseptic cartridge filled with at least one reagent of claim 12 in a reaction apparatus (110) for a reaction in a pharmaceutical process, optionally nucleic acid synthesis, wherein the use comprises connecting the cartridge inlet (2) to a supply connector (121), and the cartridge outlet (7) to a reaction connector (131) of the reaction apparatus (110), optionally
further comprising establishing a fluid communication of the at least one reservoir (5) with a pressurized air supply (120) via the supply connector (121) at least in one operational state of the cartridge, and establishing fluid communication of the at least one reservoir (5) with a reaction vessel (130) via the reaction connector (131) at least in another operational state of the cartridge,
and/or
wherein the cartridge (1) is used for establishing at least one selective reaction step, optionally of a nucleic acid synthesis, more optionally including mixing of at least one nucleotide triphosphate, a buffer and/or at least one enzyme,
and/or
wherein the cartridge (1) is being connected via the cartridge inlet (2) to a fluid supply (120) for supply with fluid, and
via the cartridge outlet (7) to a reaction vessel (130) for discharge of the at least one reagent into a reagent vessel (130), and a fluid communication from the fluid supply (120) to the at least one reservoir (5) and a fluid communication from the at least one reservoir (5) to the reaction vessel (130) is being established,
and/or
wherein fluid is supplied to the cartridge (1), wherein, for fluid communication between the fluid supply (120), the at least one reservoir (5) and the reaction vessel (130), at least one valve (4) in fluid communication with the channel (6) is opened and/or closed so as to selectively establish a fluid path along the channel (6).

14. Method of carrying out a reaction in a pharmaceutical process, optionally a nucleic acid synthesis , comprising the following steps in a sterile environment and in a closed fluid path:
providing an aseptic cartridge (1) filled with at least one reagent of claim 12, and
performing the reaction including the at least one reagent in a reaction vessel (130),
wherein, in a first reaction step, optionally a transcription, a first channel section (6a) of the cartridge is flushed; in an optional second reaction step, optionally an inactivation, a second channel section (6b) of the cartridge is flushed;
and in an optional third reaction step, optionally an enzyme inactivation, a third channel section (6c) of the cartridge is flushed.

15. Reaction apparatus (110) for performing a reaction in a pharmaceutical process and for establishing a closed fluid path with a cartridge (1) filled with at least one reagent, optionally the cartridge of claim 12, optionally for nucleic acid synthesis, the apparatus comprising
a receptacle (140) for support of the cartridge (1),
a fluid supply (120) configured to selectively adjust the pressure and/or flow rate of the fluid to be supplied,
a supply connector (121) in fluid communication with the fluid supply (120) and for connection to a cartridge inlet (2) of the cartridge (1),
a reaction vessel (130), and
a reaction connector (131) in fluid communication with the reaction vessel (130) and for connection to a cartridge outlet (7) of the cartridge (1) for establishing fluid communication with the cartridge (1) for discharge of the at least one reagent into the reaction vessel (130), optionally
further comprising cooling/heating means (160) for cooling/heating the cartridge (1), in particular the at least one reagent in the at least one reservoir (5),
and/or
further comprising at least one sensor (150) for determining the temperature of the at least one reagent, optionally in the at least one reservoir (5).
